# EUROPÄISCHE PATENTSCHRIFT

(11) **EP 2 831 448 B1**
(45) Veröffentlichungstag und Bekanntmachung des Hinweises auf die Patenterteilung: **18.10.2017**
(21) Anmeldenummer: 13711395.7
(22) Anmeldetag: 22.03.2013
(51) Int. Cl.: F16D 55/226, F16D 65/097

(54) **SCHEIBENBREMSE, INSBESONDERE FÜR EIN NUTZFAHRZEUG**
DISC BRAKE, IN PARTICULAR FOR A UTILITY VEHICLE
FREIN À DISQUE, EN PARTICULIER POUR UN VÉHICULE UTILITAIRE

(30) Priorität: 26.03.2012 DE 102012006083
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: CAMILO-MARTINEZ, José, 82008 Unterhaching (DE); KLINGNER, Matthias, 82272 Moorenweis (DE); MILLER, Bernhard, 71263 Weil der Stadt (DE); STAAHL, Christian, 81929 München (DE); TRIMPE, Robert, 82234 Weßling (DE)
(86) Internationale Anmeldenummer: PCT/EP2013/056031
(87) Internationale Veröffentlichungsnummer: WO 2013/143997

(56) Entgegenhaltungen:
- WO-A1-03/027526
- DE-A1-102007 001 213

## Beschreibung

Die Erfindung betrifft eine Scheibenbremse, insbesondere für ein Nutzfahrzeug, nach dem Oberbegriff des Anspruchs 1.

Bei Betätigung der Zuspanneinrichtung einer solchen Schiebesattel-Scheibenbremse wird zunächst der aktions-, also zuspannseitige Bremsbelag gegen die Bremsscheibe gepresst und im weiteren Verlauf durch die entstehenden Reaktionskräfte der Bremssattel unter Mitnahme des gegenüberliegenden, reaktionsseitigen Bremsbelages an die andere Seite der Bremsscheibe gedrückt.

Um den Bremssattel nach einem Lösen der Zuspannung in eine Ausgangsposition zu bewegen und damit zu verhindern, dass die Bremsbeläge, wenngleich bremskraftfrei, schleifend an der Bremsscheibe anliegen, was zu einer erhöhten Temperatur der Bremse sowie einem übermäßigen Abrieb des Reibbelages der Bremsbeläge führt, wird beispielsweise in der DE 10 2007 001 213 A1 der Einsatz einer Rückstelleinrichtung vorgeschlagen.

Bei der daraus bekannten Scheibenbremse ist zuspannseitig in einem der Führungsholme, über die der Bremssattel verschiebbar am Bremsträger gehalten ist, eine Rückstelleinrichtung vorgesehen, mit einem elastisch verformbaren Rückstellelement, konkret einer Druckfeder, mit der der Bremssattel selbsttätig in eine Ausgangsstellung gebracht wird.

Um die sozusagen Multifunktionsaufgaben erfüllen zu können, muss der Führungsholm bzw. muss das gebildete Gleitlager entsprechend modifiziert sein, was besondere fertigungstechnische Maßnahmen erfordert. Dies auch unter dem Aspekt, dass eine der beiden Lagerstellen, zu der der jeweilige Führungsholm gehört, als Loslager und die andere als Festlager ausgebildet ist.

In der DE 22 30 949 A1 sowie der WO 03/027 526 A1 ist eine Scheibenbremse geoffenbart, bei der das Rückstellelement aus einer Blattfeder gebildet ist, mit der der Bremsbelag in entlasteter Stellung ebenfalls aus dem Berührungsbereich mit der Bremsscheibe gezogen wird.

Allerdings ändert sich über das Verschleißmaß des Bremsbelages die Kennlinie dieser Blattfeder sehr stark, so dass ein gleichbleibender Rückzug des Bremsbelages bzw. eine gleichbleibende Rückzugstrecke nicht gewährleistet ist.

Der Erfindung liegt die Aufgabe zugrunde, eine Scheibenbremse der gattungsgemäßen Art so weiterzuentwickeln, dass sie konstruktiv einfacher aufgebaut ist und ihre Standzeit, insbesondere der Bremsbeläge und der Bremsscheibe erhöht wird.

Diese Aufgabe wird durch eine Scheibenbremse mit den Merkmalen des Anspruchs 1 gelöst.

Durch die Anordnung der Rückstelleinrichtung auf der der Zuspanneinrichtung gegenüberliegenden, dem reaktionsseitigen Bremsbelag zugewandten Seite wird eine wirksame, bevorzugt automatische Rückstellung des Bremssattels erreicht bei gleichzeitig minimalstem Eingriff in die Systemsteifigkeit. So ist die Lagerung der Rückstelleinrichtung im Bremssattel in einem Bereich möglich, der außerhalb hoher Biegebeanspruchungen beim Bremsen liegt. Gegebenenfalls kann zur Lagerung der Rückstelleinrichtung bei der Herstellung des Bremssattels, der üblicherweise aus Gusseisen besteht, ein Aufnahmeauge mit angeformt werden.

Nach einer vorteilhaften Variante der Erfindung ist zur Abstützung am Bremsträger innerhalb der Hülse der Stützeinrichtung als Bestandteil des Stützelementes ein in der Hülse axial bewegbares Druckstück positioniert, dessen eine Stirnfläche am Bremsträger anliegt und an dessen anderer Stirnfläche sich eine Druckfeder in Form einer Schraubenfeder abstützt, die an einem in der Hülse fest positionierten Druckteller anliegt, der für die Druckfeder ein Widerlager bildet. Das Druckstück ist somit federbelastet in der Hülse axial verschiebbar gehalten.

Während des Bremsvorgangs, bei dem, wie beschrieben, bei Wirksamwerden der Reaktionskräfte der Bremssattel unter Mitnahme des reaktionsseitigen Bremsbelages in Richtung der Zuspanneinrichtung verschoben wird, wird gleichzeitig die Druckfeder gespannt, d.h. bis zu einem definierten Weg zusammengedrückt, wobei das Druckstück am Bremsträger anliegt, während der Druckteller gegen die Druckfeder gefahren wird.

Nach einem Lösen der Bremse entspannt die Druckfeder und drückt die Hülse und damit den Bremssattel in eine Ausgangsstellung.

Die Hülse ist in einer Reibbuchse gelagert, die mit ihrer Außenfläche an der Wandung einer Aufnahmebohrung des Bremssattels anliegt, in die die Stützeinrichtung eingesetzt ist.

Mithilfe dieser Reibbuchse erfolgt eine Verschleißnachstellung, wobei beim reaktionsbedingten Verschieben des Bremssattels die Druckfeder weitgehend gestaucht wird. Liegt der zugeordnete Bremsbelag verschleißbedingt dann noch nicht an der Bremsscheibe an, wird der Bremssattel unter Überwindung der durch die Reibbuchse ausgeübten Reibkräfte noch weiter verschoben, wobei dann eine Relativbewegung des Bremssattels zur Hülse in Richtung der Bremsscheibe erfolgt. D.h., der Abstand des Bremssattels zur Bremsscheibe verringert sich, während die Position der Rückstelleinrichtung unverändert bleibt.

Nach einem Lösen der Bremse wird der nun um das Maß des Verschleißes gegenüber der Hülse verschobene Bremssattel wieder in seine Endstellung gedrückt, wobei dieser Verschiebeweg nach wie vor durch den Federweg der Druckfeder bestimmt wird.

Voraussetzung für diese Verschleißnachstellung ist, dass die zwischen der Reibbuchse und der Hülse wirksame Reibkraft größer ist als die Federkraft der Druckfeder.

Die Reibbuchse weist eine profilierte Oberfläche auf, mit vorzugsweise umlaufenden Rippen, die aus einem Kunststoff oder Gummi bestehen können. Denkbar ist aber auch, die Reibungsbuchse einstückig aus einem geeigneten Kunststoff auszubilden oder als Klemmelement, das insoweit reibschlüssig an der Mantelfläche der Hülse anliegt, alternativ oder ergänzend aber auch an der Wandung der Aufnahmebohrung.

Die Funktion der Rückstellung des Bremssattels in Verbindung mit der Verschleißnachstellung lässt sich im Übrigen mit geringem konstruktiven und fertigungstechnischen Aufwand realisieren. So sind bremssattelseitig nur geringe vorbereitende Arbeiten erforderlich und die Rückstelleinrichtung aufgrund der geringen Anzahl einfach herzustellender Bauteile kostengünstig einzusetzen. Hierzu zählt auch, dass im Bedarfsfall die Rückstelleinrichtung problemlos ausgetauscht werden kann.

Das Rückstellelement kann, nach einem anderen Gedanken als elektromechanischer Antrieb ausgebildet sein, der als Hubsystem oder dergleichen fungiert und beispielsweise Sensor gesteuert den Bremssattel in eine Ausgangsstellung bewegt.

Alles in allem bietet die Erfindung gegenüber dem Stand der Technik sowohl in funktionaler wie auch in wirtschaftlicher Hinsicht erhebliche Vorteile, die insbesondere deshalb gewichtig sind, weil Scheibenbremsen als Serienteile in großen Stückzahlen hergestellt werden.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Scheibenbremse in einer teilweise geschnittenen schematischen Draufsicht
- Figur 2: einen Teilausschnitt der Scheibenbremse in einer geschnittenen Seitenansicht
- Figur 3: eine Einzelheit der Scheibenbremse in einer perspektivischen Ansicht
- Figur 4: die Einzelheit nach Figur 3 in einer geschnittenen perspektivischen Ansicht.

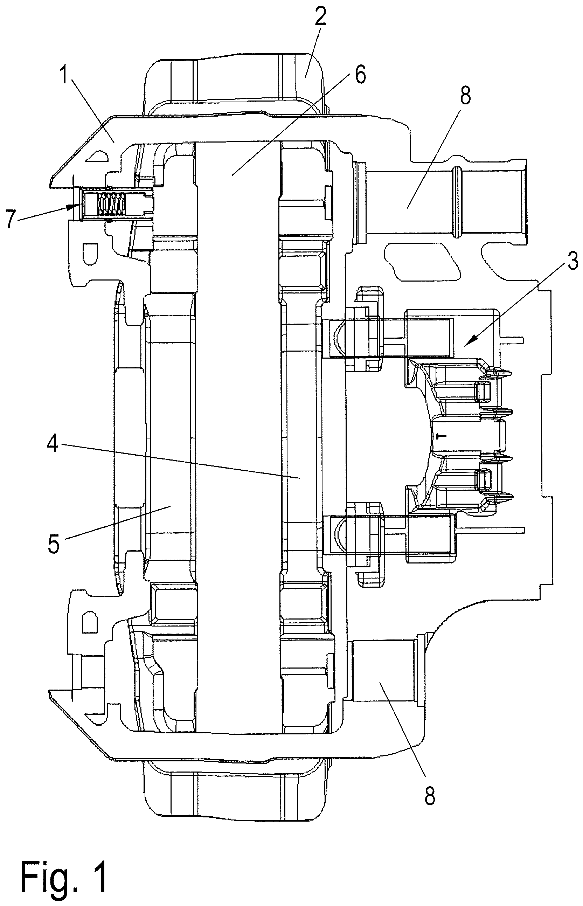

In der Figur 1 ist eine Scheibenbremse, insbesondere für ein Nutzfahrzeug dargestellt, mit einem eine Bremsscheibe 6 übergreifenden, als Schiebesattel ausgebildeten Bremssattel 1, der an einem fahrzeugseitigen achsfesten Bauteil, hier einem ortsfesten Bremsträger 2 befestigt ist.

Im Bremssattel 1 ist eine Zuspanneinrichtung 3 angeordnet, mit der bei einer Bremsung ein zugeordneter, aktionsseitiger Bremsbelag 4 gegen die Bremsscheibe 6 pressbar ist. Nach einer pressenden Kontaktierung des Bremsbelages 4 wird aufgrund der auftretenden Reaktionskräfte der Bremssattel 1 unter Mitnahme eines reaktionsseitigen Bremsbelages 5 in Richtung der Zuspanneinrichtung 3 verschoben, wozu der Bremssattel 1 an mit dem Bremsträger 2 verbundenen Führungsholmen 8 verschiebbar gelagert ist.

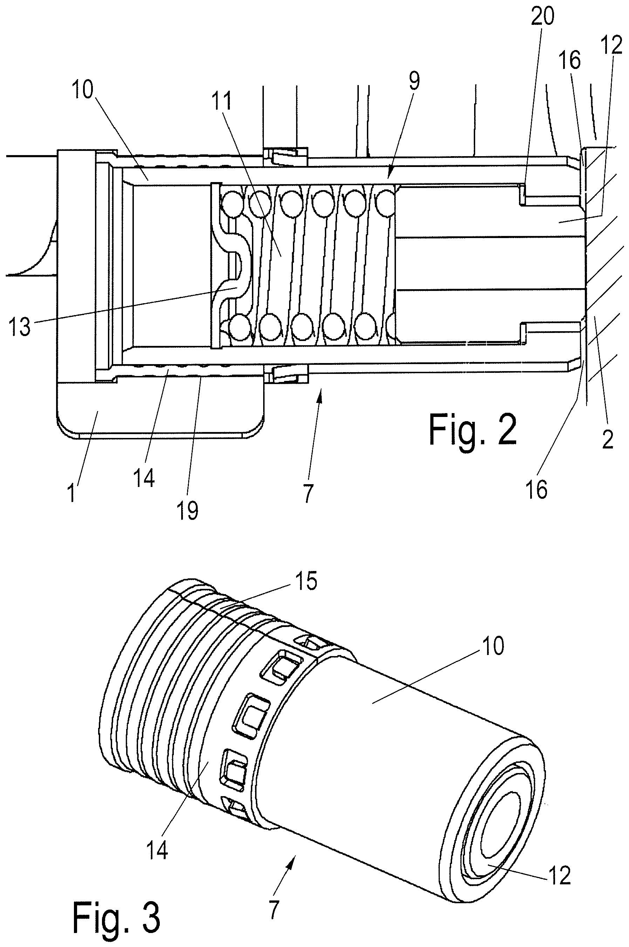

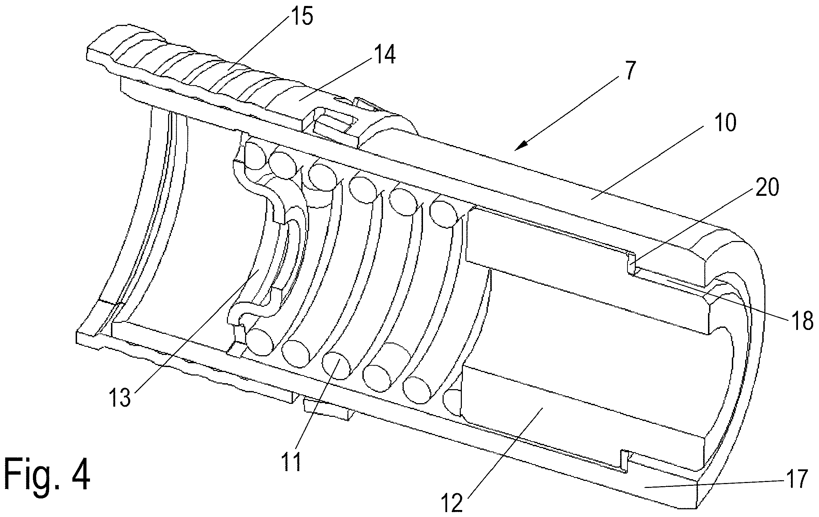

Erfindungsgemäß ist auf der der Zuspanneinrichtung 3 gegenüberliegenden Seite im Bremssattel 1 eine Rückstelleinrichtung 7 gehalten, die als Einzelheit in den Figuren 2-4 dargestellt ist.

Diese Rückstelleinrichtung 7 weist eine Hülse 10 auf, in der ein Druckteller 13 verschiebegesichert gehalten ist, der ein Widerlager für ein in der Hülse 10 positioniertes Rückstellelement 9 bildet, das sich andererseits am Bremsträger 2 abstützt.

Das Rückstellelement 9 besteht bei diesem Ausführungsbeispiel aus einer sich am Druckteller 13 abstützenden Druckfeder 11 sowie einem mit einer Stirnseite an der Druckfeder 11 und mit der anderen Stirnseite am Bremsträger 2 anliegenden Druckstück 12, das innerhalb der Hülse axial verschiebbar ist.

In der Figur 2 ist eine Bremsstellung gezeigt, in der die Druckfeder 11 vorgespannt ist und sowohl die Hülse 10 wie auch das Druckstück 12 stirnseitig am Bremsträger 2 anliegen. Zwischen der Hülse 10 und dem Bremsträger 2 ist ein umlaufender Spalt 16 gebildet, dessen Breite einem vorbestimmten Lüftspiel entspricht, dem Abstand zwischen dem Bremsbelag 5 und der Bremsscheibe 6 in ungebremster Stellung.

Um den Hub des Rückstellelementes 9 zu begrenzen und die Vorspannkraft der Druckfeder 11 zu gewährleisten, weist das Druckstück 12 an dem dem Bremsträger 2 zugewandten Endbereich einen Absatz 18 auf und die Hülse 10 in diesem Bereich ein nach Innen vorstehendes und einen Anschlag bildendes Bündchen 17, dessen Länge kürzer ist als die Länge des Absatzes 18. Zur exakten Einstellung des Spaltes 16 ist zwischen den einander zugewandten Anschlagflächen des Absatzes 18 und des Bündchens 17 eine Pass-Scheibe 20 angeordnet, die in ihrer Dicke der Breite des Spaltes 16 entspricht und das genaue Lüftspielmaß vorgibt.

Zum Ausgleich des sich verschleißbedingt verändernden Lüftspiels, ist eine Verschleißnachstellung vorgesehen, die aus einer Reibbuchse 14 besteht, die als Klemmbuchse ausgebildet sein kann und die zwischen der Hülse 10 und einer Wandung einer Aufnahmebohrung 19 im Bremssattel 1 angeordnet ist. Dabei liegt die Reibbuchse 14 reibend an der Wandung 19 an, wozu umlaufende Rippen 15 angeformt sind. Die Reibkräfte sind dabei größer als die Federkraft der Druckfeder 11.

Bei einer Bremsung wird mit Verschiebung des Bremssattels 1 die Hülse 10 unter Stauchen der Druckfeder 11 so weit verschoben, bis sie, ebenso wie das Druckstück 12 am Bremsträger 2 anliegt, letzteres jedoch ständig.

Ist das definierte Lüftspiel verschleißbedingt noch nicht überwunden, d.h., liegt der Bremsbelag mit seiner Reibfläche nicht an der Bremsscheibe 6 an, wird der Bremssattel 1 weiter verschoben, unter Überwindung der Reibkräfte der Reibbuchse 14, bis der Bremsbelag 5 an der Bremsscheibe 6 anliegt. In dieser Position verharrt anschließend die Rückstelleinrichtung 7 insgesamt im Bremssattel 1.

Die Reibbuchse 14 ist in der Bohrung 19 des Bremssattels 1 verschiebegesichert gelagert, während die Hülse 10 reibschlüssig in der Reibbuchse 14 gehalten ist und erst bei einem Lüftspielausgleich relativ zur Reibbuchse 14 verschoben wird.

Alternativ zur dargestellten Konstruktion kann die Hülse 10 auch direkt in der Bohrung 19 reibschlüssig gehalten werden, d.h., auf den Einsatz der Reibbuchse 14 wird dann verzichtet. In jedem Fall ist eine automatische Verschleißnachstellung möglich.

### Bezugszeichenliste

- 1: Bremssattel
- 2: Bremsträger
- 3: Zuspanneinrichtung
- 4: Bremsbelag
- 5: Bremsbelag
- 6: Bremsscheibe
- 7: Rückstelleinrichtung
- 8: Führungsholm
- 9: Rückstellelement
- 10: Hülse
- 11: Druckfeder
- 12: Druckstück
- 13: Druckteller
- 14: Reibbuchse
- 15: Rippe
- 16: Spalt
- 17: Bündchen
- 18: Absatz
- 19: Aufnahmebohrung
- 20: Pass-Scheibe

## Patentansprüche

1. Scheibenbremse, insbesondere für ein Nutzfahrzeug, mit einem eine Bremsscheibe (6) übergreifenden, als Schiebesattel ausgebildeten Bremssattel (1), der an einem achsfesten Bauteil, insbesondere einem ortsfesten Bremsträger (2) befestigt ist, einer Zuspanneinrichtung (3), mit der bei einer Bremsung ein zugeordneter, aktionsseitiger Bremsbelag (4) gegen die Bremsscheibe (6) pressbar ist, sowie einer ein Rückstellelement (9) aufweisenden Rückstelleinrichtung (7), mit der der Bremssattel (1) nach einem bremsbedingten Verschieben und Lösen der Bremse in eine Ausgangsstellung bringbar ist, **dadurch gekennzeichnet, dass** die Rückstelleinrichtung (7) auf der der Zuspanneinrichtung (3) gegenüberliegenden Seite der Bremsscheibe (6) im Bremssattel (1) gehalten ist.

2. Scheibenbremse nach Anspruch 1, **dadurch gekennzeichnet, dass** die Rückstelleinrichtung (7) eine Hülse (10) aufweist mit einem Widerlager für das darin positionierte Rückstellelement (9), das sich andererseits am Bremsträger (2) abstützt.

3. Scheibenbremse nach Anspruch 1 oder 2, **dadurch gekennzeichnet, dass** das Rückstellelement (9) aus einer Druckfeder (11) und einem Druckstück (12) besteht, wobei das Druckstück (12) begrenzt verschieblich in der Hülse (10) gelagert ist.

4. Scheibenbremse nach Anspruch 3, **dadurch gekennzeichnet, dass** die Druckfeder (11) als Schraubenfeder ausgebildet ist und einerseits an einem verschiebegesichert in der Hülse (10) angeordneten Druckteller (13) und andererseits an einer der beiden Stirnseiten des Druckstücks (12) anliegt, das sich mit seiner anderen Stirnseite am Bremsträger (2) abstützt.

5. Scheibenbremse nach Anspruch 3 oder 4, **dadurch gekennzeichnet, dass** das Druckstück (12) in dem dem Bremsträger (2) zugewandten Endbereich einen Ansatz (18) aufweist und die Hülse (10) im Überdeckungsbereich damit ein Bündchen (17), dessen axiale Länge kürzer ist als die zugeordnete Länge des Ansatzes (18).

6. Scheibenbremse nach Anspruch 5, **dadurch gekennzeichnet, dass** in einer gebildeten Abstufung zwischen dem Ansatz (18) und dem Bündchen (17) eine Pass-Scheibe (20) angeordnet ist, deren Dicke dem vorgegebenen Lüftspiel entspricht.

7. Scheibenbremse nach einem der Ansprüche 2-6, **dadurch gekennzeichnet, dass** das Rückstellelement (9) als elektromechanischer Antrieb ausgebildet ist.

8. Scheibenbremse nach einem der Ansprüche 2-7, **dadurch gekennzeichnet, dass** zwischen der Hülse (10) und der Wandung einer Aufnahmebohrung (19) des Bremssattels (1) eine Verschleißnachstellung in Form einer Reibbuchse (14) angeordnet ist, die reibend an der Wandung der Aufnahmebohrung (19) und/oder an der Mantelfläche der Hülse (10) anliegt..

9. Scheibenbremse nach Anspruch 8, **dadurch gekennzeichnet, dass** die Reibbuchse (14) als Klemmbuchse ausgebildet ist.

10. Scheibenbremse nach Anspruch 8 oder 9, **dadurch gekennzeichnet, dass** die Reibbuchse (14) umlaufend mit Rippen (15) versehen ist, wobei die Reibbuchse (14) oder Kontaktteile davon aus einem Material mit einem hohen Reibungskoeffizienten gegenüber dem anliegenden Material bestehen.

11. Scheibenbremse nach einem der Ansprüche 2-10, **dadurch gekennzeichnet, dass** die Hülse (10) direkt in der Aufnahmebohrung (19) des Bremssattels kraftschlüssig gelagert ist.

## Claims

1. Disc brake, in particular for a utility vehicle, having a brake calliper (1) designed as a floating calliper engaging over a brake disc (6), the brake calliper (1) being fastened to a component fixed in a stationary manner to the axle, in particular to a fixed-position brake carrier (2), a brake application means (3), with which, in the event of a braking operation, a corresponding, actuating-side brake pad (4) can be pressed against the brake disc (6), and also having a return device (7) that has a return element (9), wherein the brake calliper (1) can be brought back into a starting position by the return device (7) after displacement and release of the brake in a braking operation, **characterised in that** the return device (7) is held on the side, lying opposite to the brake application means (3), of the brake disc (6) in the brake calliper (1).

2. Disc brake according to claim 1, **characterised in that** the return device (7) has a sleeve (10), having a ledge element for the return element (9) positioned therein, which bears against the brake carrier (2) on the other side.

3. Disc brake according to claim 1 or 2, **characterised in that** the return element (9) consists of a compression spring (11) and a pressure member (12), wherein the pressure member (12) is mounted to be limitedly movable in the sleeve (10).

4. Disc brake according to claim 3, **characterised in that** the compression spring (11) is configured as a coil spring, and bears on one side against a pressure plate (13) arranged in a non-displaceable manner in the sleeve (10) and on the other side bears against one of the two front faces of the pressure member (12), which bears with its other front face against the brake carrier (2).

5. Disc brake according to claim 3 or 4, **characterised in that** the pressure member (12) has, in the end region facing towards the brake carrier (2), a ledge (18), and the sleeve (10) in the overlapping area therewith a collar (17), of which the axial length is shorter than the corresponding length of the ledge (18).

6. Disc brake according to claim 5, **characterised in that** a pass disc (20) is arranged in a stepping formed between the ledge (18) and the collar (17), the thickness of the pass disc (20) corresponding to the predetermined air clearance.

7. Disc brake according to one of claims 2 to 6, **characterised in that** the return element (9) is designed as an electromechanical drive.

8. Disc brake according to one of claims 2 to 7, **characterised in that** a wear adjustment means in the form of a friction bushing (14) is arranged between the sleeve (10) and the wall of a receiving opening (19) of the brake calliper (1), the friction bushing (14) bearing in a frictional manner against the wall of the receiving opening (19) and / or against the lateral surface of the sleeve (10).

9. Disc brake according to claim 8, **characterised in that** the friction bushing (14) is configured as a clamping bushing.

10. Disc brake according to claim 8 or 9, **characterised in that** the friction bushing (14) is provided with ribs (15) around the circumference thereof, wherein the friction bushing (14) or contact parts thereof is / are made of a material with a high friction coefficient in relation to the material lying bearing against it.

11. Disc brake according to one of claims 2 to 10, **characterised in that** the sleeve (10) is mounted directly in the receiving opening (19) of the brake calliper in a force-locking manner.

## Revendications

1. Frein à disque, notamment pour un véhicule utilitaire, comportant un étrier (1) de frein réalisé sous la forme d'un étrier de disque chevauchant un disque (6) de frein, l'étrier étant fixé à un composant fixe axialement, notamment un support (2) de frein fixe en position, un dispositif (3) de serrage par lequel lors d'un freinage une garniture (4) de frein associée côté action peut être pressée sur le disque (6) de frein, ainsi qu'un dispositif (7) de rappel comportant un élément (9) de rappel avec lequel l'étrier (1) de frein, après un déplacement dû au freinage et desserrage du frein, peut être mis dans une position initiale, **caractérisé en ce que** le dispositif (7) de rappel est maintenu dans l'étrier (1) de frein du côté du disque (6) de frein opposé au dispositif (3) de serrage.

2. Frein à disque suivant la revendication 1, **caractérisé en ce que** le dispositif (7) de rappel comporte un manchon (10) ayant une butée pour l'élément (9) de rappel qui y est placé et qui s'appuie d'autre part sur le support (2) de frein.

3. Frein à disque suivant la revendication 1 ou 2, **caractérisé en ce que** l'élément (9) de rappel est constitué d'un ressort (11) de pression et d'une pièce (12) de pression, la pièce (12) de pression étant montée de manière à être limitée en déplacement dans le manchon (10).

4. Frein à disque suivant la revendication 3, **caractérisé en ce que** le ressort (11) de pression est réalisé sous la forme d'un ressort hélicoïdal et d'une part s'applique à une plaque (13) de pression disposée dans le manchon (10) en étant empêchée de se déplacer et d'autre part à l'une des deux faces frontales de la pièce (12) de pression, qui s'applique par son autre face frontale au support (2) de frein.

5. Frein à disque suivant la revendication 3 ou 4, **caractérisé en ce que** la pièce (12) de pression comporte dans la région d'extrémité tournée vers le support (2) de frein un insert (18) et le manchon (10) dans la région de recouvrement a à cet effet une manchette (17), dont la longueur axiale est plus courte que la longueur associée de l'insert (18).

6. Frein à disque suivant la revendication 5, **caractérisé en ce qu'**il est disposé, dans un échelon formé entre l'insert (18) et la manchette (17), un disque (20) d'ajustement, dont l'épaisseur correspond au jeu des garnitures déterminé à l'avance.

7. Frein à disque suivant l'une des revendications 2 à 6, **caractérisé en ce que** l'élément (8) de rappel est réalisé sous la forme d'un entraînement électromécanique.

8. Frein à disque suivant l'une des revendications 2 à 7, **caractérisé en ce qu'**il est disposé, entre le manchon (10) et la paroi d'un alésage (19) de réception de l'étrier (1) de frein, un rattrapage d'usure sous la forme d'une douille (14) de frottement, qui s'applique par frottement à la paroi de l'alésage (19) et/ou à la surface latérale du manchon (10).

9. Frein à disque suivant la revendication 8, **caractérisé en ce que** la douille (14) de frottement est réalisée sous la forme d'une douille de serrage.

10. Frein à disque suivant la revendication 8 ou 9, **caractérisé en ce que** la douille (14) de frottement est munie de nervures (15) qui s'étendent sur son pourtour, la douille (14) de frottement ou les parties de contact de celle-ci étant en un matériau ayant un grand coefficient de frottement élevé par rapport au matériau auquel elle s'applique.

11. Frein à disque suivant l'une des revendications 2 à 10, **caractérisé en ce que** le manchon (10) est monté directement à force dans l'alésage (19) de réception de l'étrier de frein.
